# EUROPEAN PATENT SPECIFICATION

(11) **EP 2 517 449 B1**
(45) Date of publication and mention of the grant of the patent: **09.10.2013**
(21) Application number: 10796041.1
(22) Date of filing: 21.12.2010
(51) Int. Cl.: H04M 1/725, B60R 11/02, H04B 1/08, H04B 7/185, H02J 17/00

(54) **SYSTEM FOR THE RECEPTION OF SATELLITE DATA**
SYSTEM ZUM EMPFANG VON SATELLITENDATEN
SYSTEME DE RECEPTION DE DONNEES SATELLITAIRES

(30) Priority: 24.12.2009 FR 0959600
(43) Date of publication of application: 31.10.2012
(73) Proprietor: Eutelsat SA, 75015 Paris (FR); Calearo Antenne S.p.A., 20121 Milano (IT)
(72) Inventor: ARCIDIACONO, Antonio, F-75016 Paris (FR); PULVIRENTI, Orazio, F-75015 Paris (FR); ZAMBERLAN, Daniel, I-36051 Creazzo - Vicenza (IT); ROTONDI, Vito, I-35020 Ponte S. Nocolo - Padova (IT)
(74) Representative: Lebkiri, Alexandre
(86) International application number: PCT/EP2010/070382
(87) International publication number: WO 2011/076793

(56) References cited:
- WO-A2-2005/125207
- US-A1- 2004 142 733
- US-A1- 2005 143 047
- "Telefonieren an Bord EU macht Weg frei für Handys", ONLINE FOCUS,, [Online] 7 April 2008 (2008-04-07), pages 1-5, XP007914251, Retrieved from the Internet: URL:http://www.focus.de/reisen/fliegen/tel efonieren-an-bord-eu-macht-weg- frei-fuer-handys_aid_268768.html> [retrieved on 2010-08-04]

## Description

The present invention concerns a system for the reception of satellite data for a vehicle for the transmission of data originating from a satellite towards user terminals. The invention finds an application of particular interest within the framework of the diffusion of data towards mobile user terminals which a motor vehicle comprises, via a satellite.

Certain satellites (this is the case in particular with satellites in band S) are nowadays likely to integrate a payload allowing the distribution of applications and contents to be ensured towards portable mobile terminals and vehicles.

Such a configuration is, however, likely to pose two major difficulties.

Thus, the main problem posed by the distribution of applications and contents by satellite towards portable mobile terminals lies in the fact that very few mobile terminals exist which are capable of receiving directly the signal emitted by a satellite. This therefore necessitates using an adapted receiver to process the received signals and to transmit the processed signals to the mobile terminals.

Furthermore, in a known manner, the devices for the reception of satellite data equipping vehicles comprise an antenna situated on the exterior of the passenger compartment of the motor vehicle and a receiver situated in the passenger compartment. The satellite signals received by the antenna are immediately retransmitted to the receiver via a wired connection. The latter comprises in particular an amplifier and a demodulator so as to adapt the signals picked up by the exterior antenna to retransmit them to a determined mobile user terminal situated in the passenger compartment of the vehicle.

A disadvantage in this type of device lies in the fact that an opening must be made in the bodywork to fix the external antenna there and to connect the latter, by means of a cable, to a receiver which is situated in the passenger compartment, this cable being able to serve both for the transmission of data and for the electrical supply of the antenna. The receiver is further connected physically by means of a cable to the battery of the motor vehicle (for example via a connection to the cigarette-lighter). Systems for the reception of satellite data in vehicles are known for example from documents WO 2005/125207 or XP 007914251. Moreover, the principle of power transfer carried out from a transmitter coil towards a receiver coil is known from document US 2004 1427 33.

In this context, the present invention aims to provide a transmission system of satellite data towards user terminals, the said system being intended to be installed in a vehicle such as a motor vehicle and allowing the greatest possible number of terminals to be connected, including the terminals which are not adapted to receive satellite signals, whilst avoiding the problems linked to the installation of such a system, in particular the problems linked to the wiring of this system. The system is of particular interest for an installation in vehicles which are already in circulation. The invention aims to propose a system for the reception of satellite data, the installation of which is able to be easily realized and is low in cost.

To this end, the invention relates to a system for the reception of satellite data for a vehicle, the said system comprising:
- an interface housing suited to be mounted on the exterior of the vehicle and having a profiled shape, said interface housing comprises a first part suited to be arranged on a bodywork element of the vehicle and a second part suited to be arranged close to a window of the vehicle;
- a transmitter coil suited to be arranged inside the vehicle and to create a magnetic field oscillating at a determined frequency when the said transmitter coil is supplied by an energy source;
the said interface housing comprising:
- an antenna suited to receive data emitted by a satellite arranged in the said first part of the said housing;
- means for processing the said data received by the said antenna;
- means for wireless connection to a local network suited to transmit the said processed data to a terminal located inside the vehicle;
- a receiver coil arranged in the said second part of the said housing suited to resonate at the said determined frequency under the effect of the said magnetic field created by the said transmitter coil for transferring power from the said transmitter coil towards the said receiver coil.

For the remainder of the description, "window" designates the front or rear window panel of the vehicle, a panoramic roof, an opening roof or else a window of the vehicle. The system according to the invention is, however, preferably implemented on the front window panel of the vehicle.

Owing to the invention, the transfer of data from the exterior interface housing (situated on the roof of the vehicle) towards a mobile user terminal (situated in the passenger compartment of the vehicle) does not require any complex installation, since the system according to the invention does not use any wires:
- for the transmission of data, adapted to the mobile terminals incapable of directly receiving a signal emitted by a satellite, from the interface housing towards the local network;
- for the transmission in electrical energy from the energy source (formed by the battery of the vehicle) towards the interface housing, the transmission of energy being realized by means of two electromagnetic fields resonating at a determined frequency.

The system according to the invention is totally wireless; the system therefore allows one to avoid the use of cables for the transmission of data and/or energy; consequently, no opening has to be made in the bodywork. The installation of a system according to the invention is therefore greatly facilitated, involving in fact a great reduction in cost. Furthermore, the system according to the invention allows the satellite signals received by the antenna to be adapted so that they are compatible with the formats recognized by the terminals.

It will be noted that these terminals can be mobile terminals belonging to the driver or to the passenger(s) of the vehicle or terminals provided with a wireless dialogue interface integrated on board the vehicle.

Apart from the main characteristics which have just been mentioned in the preceding paragraph, the system for the reception of data according to the invention can have one or more supplementary characteristics below, considered individually or according to all the technically realizable combinations:
- the said transmitter coil and the said receiver coil are spaced apart from each other by a maximum distance strictly less than eight times the radius of the transmitter or receiver coils;
- the said diameter of the said transmitter and receiver coils is comprised between 1 cm and 8 cm;
- the said antenna is mounted in rotation about an axis and is suited to be positioned in two stable perpendicular positions;
- the said interface housing comprises a battery to supply electrically the said processing means and/or the said connection means, the said battery being suited to be recharged by the said receiver coil;
- the said interface housing comprises fixing means suited to ensure a detachable mounting of the said system on the said bodywork element;
- the said wireless connection means to a local network are formed by WiFi, WiMax, wireless USB, DLNA, UPnP or BlueTooth connection means, it being understood that these connection means are in no way restrictive;
- the said wireless connection means to a local network comprise a transmission antenna, the said transmission antenna being housed in the said second part.

The invention further relates to a motor vehicle, characterized in that it comprises a system for the reception of satellite data in accordance with the system of the invention.

Advantageously, the said second part of the said interface housing is situated opposite a non-shielded part of the window of the vehicle.

Other characteristics and advantages of the invention will clearly emerge from the description which is given below, by way of indication and in no way in a restrictive manner, with reference to attached figures, in which:
- Figure 1 represents, in a schematic manner, a whole view and an enlargement of a system according to the invention;
- Figure 2 represents, in a schematic manner, an example of optional implementation of a system according to the invention;
- Figure 3 represents, in a schematic manner, an element which a system according to the invention can comprise.

For reasons of clarity, only the elements which are useful for an understanding of the invention have been represented, and this being without being to scale, and in a diagrammatic manner. Furthermore, similar elements situated on different figures have identical reference numbers.

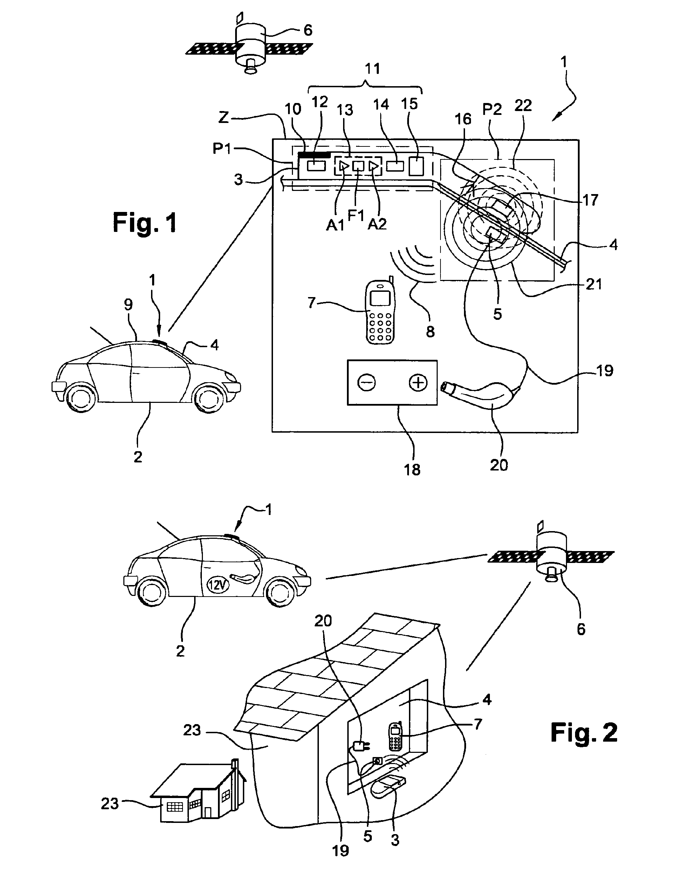

Figure 1 illustrates a whole view and an enlargement Z of a system 1 for the reception of satellite data according to the invention equipping a vehicle 2. The system 1 comprises in particular an interface housing 3 and a transmitter coil 5. The interface housing 3 is suited to ensure the interface between a telecommunications satellite 6 and user terminals 7 (a single one is represented), such as mobile terminals (of the PMP "Portable MultiMedia Player" type, PDA "Personal Digital Assistant" type or else a mobile telephone) situated inside the vehicle 2, via a wireless local network 8 of the WiFi, WiMax, wireless USB, DLNA, UPnP or BlueTooth type.

The interface housing 3 has a profiled shape forming a first part P1 arranged on a bodywork element, such as for example on the roof 9 of the vehicle 2, and a second part P2 extending via a curve the first part P1 arranged close to the front window 4 of the vehicle 2.

In a simplified manner, the first part P1 of the interface housing 3 comprises:
- an antenna 10 suited to receive data emitted by the satellite 6;
- means 11 for processing the data received by the said antenna 10 comprising:
   * means 12 for selection of a polarisation; the satellite 6 in fact permits the emission and reception of the polarised transmissions: the polarisation can be linear (in this case the two directions of polarisation are respectively horizontal and vertical) or circular (in this case the two directions of polarisation are respectively circular left or circular right); in the case of a transmission in band S, the polarisations are circular right and left polarisations;
   * a low noise amplifier LNA 13, the role of which consists in amplifying the signal originating from the satellite 6. The LNA comprises for example a first amplifier A1 suited to amplify the received signal, a filter F1 suited to filter the amplified signal and a second amplifier A2 suited to amplify the filtered signal;
   * a tuner 14, suited to recover the useful analogue signal filtered and amplified by the LNA 13 and suited to convert the said analogue signal into a digital signal. The signal is then transmitted towards a demodulator 15 on two channels, a phase channel (channel 1) and a quadrature channel (channel Q);
   * the demodulator 15 is suited, from the digital signals transmitted by the tuner 14, to create TS (Transport Stream) packets then, from these TS packets, to extract (i.e. decapsulate) IP packets which will be transmitted to wireless connection means 16.

The second part P2 of the interface housing comprises:
- the connection means 16 suited to establish a wireless connection to the local network 8, typically it can be, for example, a connection of the WiFi, WiMax or BlueTooth type; it will be noted that it is possible to use a WiFi infrastructure of the "ad hoc" type (i.e. a mode of operation without an access point) even if an "infrastructure" mode with an access point can also be envisaged;
- a receiver coil 17, the function of which will be described in further detail below.

The interface housing 3 does not just pick up signals which arrive from any satellite 6 to retransmit them immediately to a mobile user terminal 7, but it adapts them into IP packets so that they are compatible with the formats recognized by the majority of the terminals 7 which support the processing at the level of the IP layer (in particular the mobile terminals 7). In this way, the user terminal 7 does not need to be compatible to receive satellite signals 6 since it is connected to the interface housing 3 by means of the local wireless network 8.

Furthermore, the supplying of the interface housing 3 is carried out by means of the transmitter coil 5 and the receiver coil 17.

These latter are positioned opposite each other and separated by the window 4 of the vehicle 2. The transmitter coil 5 is connected to the battery 18 of the vehicle 2 by means of a cable 19 comprising, at one of its ends, an adapter 20 of the cigarette-lighter type suited to be inserted into a cigarette-lighter socket (not shown) which the vehicle 2 comprises.

When the transmitter coil 5 is supplied with energy, it creates a magnetic field 21 oscillating at a determined resonance frequency, this resonance frequency being fixed by a first generator circuit of a signal at the said resonance frequency to which the transmitter coil 5 is connected. The magnetic field 21 induces a magnetic field 22 to the receiver coil 17, which aligns itself on the same resonance frequency as that of the transmitter coil 5.

Advantageously, the resonance frequency of the transmitter and receiver coils 5 and 17 allows a strong connection to be established between them and allows power to be exchanged. In a conventional manner, it is important to stress that a magnetic field is not very sensitive to obstacles which may be found between the transmitter (transmitter coil 5) and the receiver (receiver coil 17). The result of this is that the window 4 which separates the two transmitter and receiver coils 5 and 17 is not an obstacle to the transfer of power between these latter.

To optimize the transfer of power, the distance separating the transmitter coil 5 from the receiver coil 17 is strictly less than eight times the radius of the transmitter coil 5 or receiver coil 17. In a non-restrictive manner, the diameter of the transmitter and receiver coils 5 and 17 can be between 1 and 8 cm. It should also be noted that the transmitter 5 and receiver 17 coils have an identical radius.

Furthermore, the resonance frequency of the transmitter and receiver coils 5 and 17 is selected so as:
- to maximize the transfer of energy;
- to limit the interferences with the equipment situated in the vicinity, such as for example WiFi equipment, FM radios or GPS equipment;
- to limit any dispersion of power.

Advantageously, the first part P1 of the interface housing 3 comprises the antenna 10, which is positioned in a substantially horizontal manner, in other words the antenna 10 is substantially parallel to the roof 9 of the vehicle 2. Such a positioning allows the satellite signals to be picked up more efficiently.

Furthermore, the receiver coil 17 is situated in the second part P2 of the interface housing 3. The transmitter and receiver coils 5 and 17 are positioned facing each other and separated by the window 4 of the vehicle 2. The transmitter and receiver coils 5 and 17 are preferably positioned in a non-shielded area of the window 4 to optimize the transfer of power. In a conventional manner, such a non-shielded area is situated in the rear part of the rear view mirror in the passenger compartment. Likewise, the connection means 16 are situated in the second part P2 and more particularly opposite the non-shielded area such that the data transmitted by the connection means 16 do not undergo to great attenuation.

As represented in Figure 1, a particularly interesting application of the system 1 according to the invention consists in installing an interface housing 3 on the roof 9 of a motor vehicle 2. Hence, the system 1 will allow the occupants of the vehicle 2 to benefit from the connectivity by using their own terminals 7, not necessarily adapted to satellite reception. The terminals installed on board the vehicle will also benefit from this connectivity. It will be sufficient, for example, to connect, via the local network 8, one's mobile telephone 7 to the interface housing 3 on board in one's car 2 to consult the weather forecast, to use on demand music services or to watch satellite television.

With a use of the system 1 on a vehicle 2, the interface housing 3 can be made integral with the vehicle 2 by any type of fixing means (not shown) such as for example a series of magnetic feet surrounded by a rubber protection, a series of suction cups or of adhesive pads of the Velcro^{™} type. These fixing means are detachable fixing means.

The fixing means can be formed by attachment means comprising a secured closure ensured for example by means of a lock.

Owing to this feature and as shown in Figure 2, when a vehicle 2 is equipped with a system 1 according to the invention, the passengers of the vehicle 2 can free the interface housing 3 as soon as they arrive at their home or at their holiday destination.

In such an implementation, the interface housing 3 can be positioned on the ledge of a window 4 or on the window 4 of a building 23 by means of suction cups. The transmitter coil 5 is positioned inside the building 23 and close to the interface housing 3, which comprises the receiver coil 17. The transmitter coil 5 is connected to the electrical network of the building 23 by means of an adapter 20 of the sector type. In this way, the passengers of the vehicle can continue to benefit from the services which the system 1 offered to them during their journey.

According to an additional possibility offered by the invention, which is not illustrated, the interface housing 3 can be equipped with a rechargeable battery. Thus, when the passengers free the interface housing 3 from the vehicle 2 to transport it, the rechargeable battery supplies, for example, the processing means 11 and/or the connection means 16. In other words, the interface housing 3 can function in an autonomous manner over a short period.

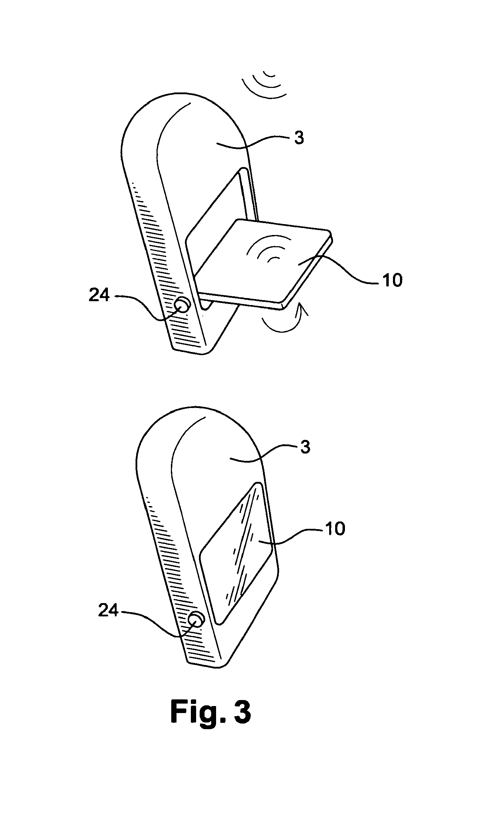

Figure 3 illustrates a different implementation of the invention, in which the antenna 10 of the interface housing 3 is mounted in rotation about an axis 24 such that the antenna can present at least two perpendicular stable positions. When the interface housing 3 is positioned on a vertical wall (such as for example by means of suction cups on the window 4 of a building 23), the antenna 10 is likewise found in vertical position. A vertical positioning of the antenna 10 is not optimal for the reception of satellite signals. So as to remedy such a deficiency, the antenna 10 is pivoted up to an angle of 90°. This latter is therefore in optimum position.

It can be noted that the two above-mentioned perpendicular stable positions are given here by way of example and are in no way restrictive. Thus, the antenna 10 can be positioned according to a determined angle comprised in a range varying from 0 to 90 degrees.

Furthermore, when the interface housing 3 is positioned on the roof 9 of the vehicle 2, the antenna 10 can also be pivoted so as to pick up more efficiently the signals originating from a terrestrial antenna, such as for example the signals of the TDT type (for terrestrial digital television).

To sum up, the system 1 according to the invention is primarily adapted for use in motor vehicles, but it can also be used at home or at any other location, such as for example on a beach, owing to the rechargeable battery.

According to a variant of the invention, the system 1 can be an integrating part of a motor vehicle 2. Thus, a car manufacturer can present the system 1 as an option which the purchaser can select.

For the record, the interface housing 3 has a profiled shape forming a first part P1 suited to be arranged on a bodywork element, such as for example on the roof 9 of the vehicle 2, and a second part P2 extending via a curve the first part P1 suited to be arranged close to the front window 4 of the vehicle 2.

Even though the invention has been more particularly described with a housing 3 arranged at the level of the front window, the housing can also be positioned at the level of a panoramic roof present on the vehicle. In this precise case, it is to be noted that the panoramic roofs usually comprise an upper convex part. The part P2 therefore extends the first part P1 which is fixed on the roof of the vehicle so as to be arranged close to the upper convex part of the panoramic roof of the vehicle.

In a general manner, the system 1 is distinguished in that:
- the transmission of energy between the transmitter coil 5 and the interface housing 3 is carried out wirelessly,
- the transmission of data between the interface housing 3 and the local network 8 is carried out wirelessly,
- the interface housing 3 adapts the signals received by the antenna 10 such that they are compatible with the mobile terminals 7.

In other words, the mobile terminals do not need to adapt themselves to the satellite signals since the system 1 adapts the said signals to the mobile terminals 7.

Of course, the invention is not limited to the embodiment which has just been described. Thus, the invention has been more particularly described in the case where the received signals are satellite signals. Even if the invention is more particularly adapted to satellite reception, it is also possible to use reception means suited to receive signals originating from a terrestrial antenna. For example, we could also use terrestrial digital television or TDT as the distribution system instead of the satellite.

## Claims

1. System (1) for the reception of satellite data for a vehicle (2), the said system (1) comprising:
- an interface housing (3) suited to be mounted on the exterior of the vehicle (2) and having a profiled shape, the said interface housing (3) comprises a first part (P1) suited to be arranged on a bodywork element (9) of the vehicle (2) and a second part (P2) suited to be arranged close to a window (4) of the said vehicle (2);
- a transmitter coil (5) suited to be actuated inside the vehicle (2) and to create a magnetic field (21) oscillating at a determined frequency when the said transmitter coil is supplied by an energy source (18);
the said interface housing (3) comprising:
- an antenna (1) suited to receive data emitted by a satellite (6) arranged in the said first part (P1) of the said interface housing (3);
- means (11) for processing the said data received by the said antenna (10);
- means (16) for wireless connection to a local network (8) suited to transmit the said processed data to a terminal (7) located inside the vehicle;
- a receiver coil (17) arranged in the said second part (P2) of the said interface housing (3) suited to resonate at the said determined frequency under the effect of the said magnetic field (21) created by the said transmitter coil (5) for transferring power from the said transmitter coil (5) towards the said receiver coil (17).

2. System (1) according to Claim 1, **characterized in that** the said transmitter coil (5) and the said receiver coil (17) are spaced apart from each other by a maximum distance strictly less than eight times the radius of the said transmitter coil (5) or receiver coil (17).

3. System (1) according to one of the preceding claims, **characterized in that** the diameter of the said transmitter coil (5) and receiver coil (17) is comprised between 1 cm and 8 cm.

4. System (1) according to one of the preceding claims, **characterized in that** the said antenna (10) is mounted in rotation about an axis (24) and (10) is suited to be positioned in two stable perpendicular positions.

5. System (1) according to one of the preceding claims, **characterized in that** the said interface housing (3) comprises a battery for supplying electrically the said processing means (11) and/or the said connection means (16), the said battery being suited to be recharged by the said receiver coil (17).

6. System (1) according to one of the preceding claims, **characterized in that** the said interface housing (3) comprises fixing means suited to ensure a detachable mounting of the said system (1) on the said bodywork element (9).

7. System (1) according to one of the preceding claims, **characterized in that** the said wireless connection means (16) to a local network (8) are formed by WiFi, WiMax, wireless USB, DLNA, UPnP or BlueTooth connection means.

8. System (1) according to one of the preceding claims, **characterized in that** the said wireless connection means (16) to a local network (8) comprise a transmission antenna, the said transmission antenna being housed in the said second part (P2).

9. Motor vehicle (2) **characterized in that** it comprises a system (1) for the reception of satellite data according to one of the preceding claims.

10. Motor vehicle (2) according to the preceding claim, **characterized in that** the said second part (P2) of the said interface housing (3) is situated opposite a non-shielded part of the said window (4) of the vehicle (2).

## Patentansprüche

1. System (1) für den Empfang von Satellitendaten für ein Fahrzeug (2), wobei das genannte System (1) umfasst:
- ein Schnittstellengehäuse (3), das angepasst ist, um auf der Außenseite des Fahrzeugs (2) montiert zu werden und eine profilierte Form aufweist, wobei das genannte Schnittstellengehäuse (3) einen ersten Teil (P1) umfasst, der angepasst ist, um auf einem Karosserieelement (9) des Fahrzeugs (2) angeordnet zu sein, und einen zweiten Teil (P2), der angepasst ist, um nahe am Fenster (4) des genannten Fahrzeugs (2) angeordnet zu sein,
- eine Überträgerspule (5), die angeordnet ist, um innerhalb des Fahrzeugs (2) betätigt zu werden und ein Magnetfeld (21) zu realisieren, das in einer bestimmten Frequenz schwingt, wenn die genannte Überträgerspule von einer Energiequelle (18) versorgt wird;
wobei das genannte Schnittstellengehäuse (3) umfasst:
- eine Antenne (1), die angepasst ist, um Daten zu empfangen, die von einem Satellit (6) ausgegeben werden, der in dem genannte ersten Teil (P1) des genannten Schnittstellengehäuses (3) angeordnet ist;
- Mittel (11) zur Verarbeitung der genannten Daten, die von der genannten Antenne (10) empfangen werden;
- Mittel (16) zur drahtlosen Verbindung mit einem lokalen Netzwerk (8), das angepasst ist, um die genannten verarbeiteten Daten auf ein sich innerhalb des Fahrzeugs befindendes Terminal (7) zu übertragen;
- Eine Empfängerspule (17), die in dem genannten zweiten Teil (P2) des genannten Schnittstellengehäuses (3) angeordnet ist, das angepasst ist, um in der genannten festgelegten Frequenz unter der Wirkung des genannten, von der genannten Überträgerspule (5) realisierten Magnetfeldes (21) mitzuschwingen, um Strom von der genannten Magnetspule (5) auf die genannte Empfängerspule (17) zu übertragen.

2. System (1) gemäß Anspruch 1, **dadurch gekennzeichnet, dass** die genannte Überträgerspule (5) und die genannte Empfängerspule (17) voneinander durch eine maximale Entfernung beabstandet sind, die deutlich geringer ist als der achtfache Radius der genannten Überträgerspule (5) oder der Empfängerspule (17).

3. System (1) gemäß einem der voranstehenden Ansprüche, **dadurch gekennzeichnet, dass** der Durchmesser der genannten Überträgerspule (5) und der Empfängerspule (17) zwischen 1 cm und 8 cm inbegriffen ist.

4. System (1) gemäß einem der voranstehenden Ansprüche, **dadurch gekennzeichnet, dass** die genannte Antenne (10) in Rotation um eine Achse (24) montiert ist und (10) geeignet ist, um in zwei stabilen lotrechten Positionen positioniert zu werden.

5. System (1) gemäß einem der voranstehenden Ansprüche, **dadurch gekennzeichnet, dass** das genannte Schnittstellengehäuse (3) eine Batterie zur elektrischen Versorgung der genannten Prozessormittel (11) und / oder der genannten Anschlussmittel (16) umfasst, wobei die genannte Batterie angepasst ist, um durch die genannte Empfängerspule (17) wieder aufgeladen zu werden.

6. System (1) gemäß einem der voranstehenden Ansprüche, **dadurch gekennzeichnet, dass** das genannte Schnittstellengehäuse (3) Befestigungsmittel umfasst, die angepasst sind, um eine abnehmbare Montage des genannten Systems (1) auf dem genannten Karosserieelement (9) zu gewährleisten.

7. System (1) gemäß einem der voranstehenden Ansprüche, **dadurch gekennzeichnet, dass** die genannten drahtlosen Anschlussmittel (16) an ein lokales Netzwerk (8) durch ein W-LAN, WiMax, drahtloses USB, DLNA, UPnP oder BlueTooth-Anschlussmittel gebildet werden.

8. System (1) gemäß einem der voranstehenden Ansprüche, **dadurch gekennzeichnet, dass** das genannte drahtlose Anschlussmittel (16) an ein lokales Netzwerk (8) eine Überträgerantenne umfasst, wobei die genannte Überträgerantenne in dem genannten zweiten Teil (P2) aufgenommen ist.

9. Kraftfahrzeug (2), **dadurch gekennzeichnet, dass** es ein System (1) für den Empfang von Satellitendaten gemäß einem der voranstehenden Ansprüche umfasst.

10. Kraftfahrzeug (2) gemäß einem der voranstehenden Ansprüche, **dadurch gekennzeichnet, dass** der genannte zweite Teil (P2) des genannten Schnittstellengehäuses (3) sich gegenüber einem nicht abgeschirmten Teil des genannten Fensters (4) des Fahrzeugs (2) befindet.

## Revendications

1. Système (1) de réception de données satellitaires pour véhicule (2), ledit système (1) comportant :
- un boitier d'interface (3) apte à être monté à l'extérieur du véhicule (2) et présentant une forme profilée de sorte, ledit boitier d'interface (3) comportant une première partie (P1) apte à être disposée sur un élément de carrosserie (9) du véhicule (2) et une deuxième partie (P2) apte à être disposée à proximité d'une vitre (4) dudit véhicule (2);
- une bobine émettrice (5) apte à être agencée à l'intérieur du véhicule (2) et à créer un champ magnétique (21) oscillant à une fréquence déterminée lorsque ladite bobine émettrice est alimentée par une source d'énergie (18) ;
ledit boitier d'interface (3) comportant :
- une antenne (10) apte à recevoir des données émises par un satellite (6) disposée dans ladite première partie (P1) dudit boitier d'interface (3) ;
- des moyens (11) de traitement desdites données reçues par ladite antenne (10) ;
- des moyens (16) de connexion sans fil à un réseau local (8) aptes à transmettre lesdites données traitées à un terminal (7) localisé à l'intérieur du véhicule ;
- une bobine réceptrice (17) disposée dans ladite deuxième partie (P2) dudit boitier d'interface (3) apte à résonner à ladite fréquence déterminée sous l'effet dudit champ magnétique (21) créé par ladite bobine émettrice (5) pour transférer la puissance de ladite bobine émettrice (5) vers ladite bobine réceptrice (17).

2. Système (1) selon la revendication 1 **caractérisé en ce que** ladite bobine émettrice (5) et ladite bobine réceptrice (17) sont éloignées l'une de l'autre d'une distance maximale strictement inférieure à huit fois le rayon de ladite bobine émettrice (5) ou réceptrice (17).

3. Système (1) selon l'une des revendications précédentes **caractérisé en ce que** le diamètre de ladite bobine émettrice (5) et de ladite bobine réceptrice (17) est compris entre 1 cm et 8 cm.

4. Système (1) selon l'une des revendications précédentes **caractérisé en ce que** ladite antenne (10) est montée en rotation autour d'un axe (24) and est apte à être positionnée dans deux positions stables perpendiculaires.

5. Système (1) selon l'une des revendications précédentes **caractérisé en ce que** ledit boitier d'interface (3) comporte une batterie pour alimenter électriquement lesdits moyens (11) de traitement et/ou lesdits moyens (16) de connexion, ladite batterie étant apte à être rechargée par ladite bobine réceptrice (17).

6. Système (1) selon l'une des revendications précédentes **caractérisé en ce que** ledit boitier d'interface (3) comporte des moyens de fixation aptes à assurer un montage amovible dudit système (1) sur ledit élément de carrosserie (9).

7. Système (1) selon l'une des revendications précédentes **caractérisé en ce que** lesdits moyens (16) de connexion sans fil à un réseau local (8) sont formés par des moyens de connexion WiFi, WiMax, wireless USB, DLNA, UPnP ou BlueTooth.

8. Système (1) selon l'une des revendications précédentes **caractérisé en ce que** lesdits moyens (16) de connexion sans fil à un réseau local (8) comportent une antenne d'émission, ladite antenne d'émission étant logée dans ladite deuxième partie (P2).

9. Véhicule automobile (2) **caractérisé en ce qu'**il comporte un système (1) de réception de données satellitaires selon l'une des revendications précédentes.

10. Véhicule automobile (2) selon la revendication précédente **caractérisé en ce que** ladite deuxième partie (P2) dudit boitier d'interface (3) est située en regard d'une partie non blindée de ladite vitre (4) du véhicule (2).
